Europäisches Patentamt

European Patent Office

Office européen des brevets

(11) Veröffentlichungsnummer: **0 106 302**
**A2**

(12) EUROPÄISCHE PATENTANMELDUNG

(21) Anmeldenummer: 83110104.3

(22) Anmeldetag: 11.10.83

(51) Int. Cl.³: **H 04 B 7/005**

(30) Priorität: 13.10.82 DE 3237900

(43) Veröffentlichungstag der Anmeldung:
25.04.84 Patentblatt 84/17

(84) Benannte Vertragsstaaten:
AT DE FR GB NL

(71) Anmelder: ANT Nachrichtentechnik GmbH
Gerberstrasse 33
D-7150 Backnang(DE)

(72) Erfinder: Heer, Roland, Dipl.-Ing.
Berliner Ring 48
D-7150 Backnang(DE)

(74) Vertreter: Schickle, Gerhard, Dipl.-Ing.
ANT Nachrichtentechnik GmbH Patent- und
Lizenzabteilung Gerberstrasse 33
D-7150 Backnang(DE)

(54) Schaltung zur Kompensation von nichtlinearen Signalverzerrungen.

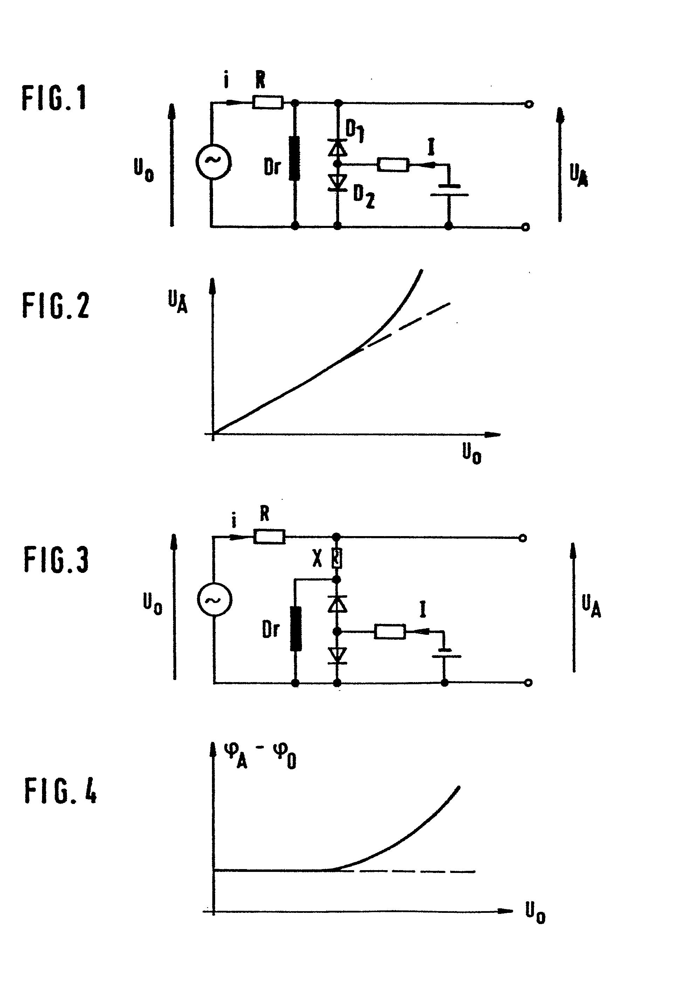

(57) Eine mit geringem Bauelementeaufwand realisierte Schaltung zur Kompensation von nichtlinearen Signalverzerrungen besteht aus einem Spannungsteiler, dessen einer Teil mindestens eine Diode (D1, D2) enthält. Durch diese Diode ist ein Gleichstrom (I) geleitet, von dessen Größe es abhängt, ab welchem Augenblickswert des Stromes (i) des zu entzerrenden Eingangssignals ($U_0$) die Diode sperrt (Fig. 1).

FIG.1

Croydon Printing Company Ltd.

0106302

- 1 -

K1 E7/Th/wei
BK 82/2

## Schaltung zur Kompensation von nichtlinearen Signalverzerrungen

Die vorliegende Erfindung betrifft eine Schaltung zur Kompensation von nichtlinearen Signalverzerrungen.

Bei der Übertragung von z.B. digitalen Signalen mit mehrstufiger Quadratur-Amplitudenmodulation (QAM) oder von Trägerfrequenzsignalen mit Einseitenband-Amplitudenmodulation über Richtfunksysteme treten in verschiedenen Übertragungsgliedern (Mischer, Verstärker etc.) nichtlineare Verzerrungen auf, die zu einer Degradation der Signalqualität führen.

Zur Kompensation dieser Verzerrungen ist beispielsweise aus der DE-PS 27 43 352 eine Mischeranordnung bekannt, die mit einem Entzerrernetzwerk beschaltet ist.

Der Erfindung liegt die Aufgabe zugrunde, eine Schaltung zur Kompensation von nichtlinearen Verzerrungen anzugeben, die sich durch einen sehr geringen Schaltungsaufwand auszeichnet.

Erfindungsgemäß wird die Aufgabe dadurch gelöst, daß das zu entzerrende Eingangssignal an einen Spannungsteiler gelegt ist, dessen einer Teil mindestens eine Diode enthält, und daß durch die Diode ein Gleichstrom geleitet ist, von dessen Größe es abhängt, ab welchem Augenblickswert des Eingangssignalstromes die Diode sperrt.

Zweckmäßige Ausführungen der Erfindung gehen aus den Unteransprüchen hervor.

Die erfindungsgemäße Schaltung ermöglicht eine sehr weitgehende Kompensation der komplexen nichtlinearen Verzerrungen $K_n$ ungradzahliger Ordnung, insbesondere der Verzerrung $K_3$ dritter Ordnung. Sie kann als Vorverzerrer oder Nachentzerrer in verschiedenen Frequenzlagen eingesetzt werden.

Anhand von in der Zeichnung dargestellten Ausführungsbeispielen soll nun die Erfindung näher erläutert werden. Es zeigen:

Fig. 1 eine Schaltung, die einen Klirrfaktor mit rein reeller Komponente erzeugt,
Fig. 2 eine Entzerrerkennlinie dieser Schaltung,
Fig. 3 eine Schaltung, die einen Klirrfaktor mit komplexer Komponente erzeugt, und
Fig. 4 eine Entzerrerkennlinie dieser Schaltung.

Wie der Fig. 1 zu entnehmen ist, liegt die zu entzerrende Eingangsspannung $U_o$ an einem Spannungsteiler, dessen einer Teil einen Widerstand R und dessen anderer Teil zwei in Reihe geschaltete, entgegengesetzt gepolte Dioden $D_1$ und $D_2$ enthält. An dem Verbindungspunkt zwischen den beiden Dioden $D_1$, $D_2$ ist eine Gleichstromquelle angeschlossen, die den Dioden einen Vorstrom I zuführt. Solange der Augenblickswert des von der Signalquelle $U_o$ erzeugten Stromes i kleiner ist als I/2, sind beide Dioden $D_1$ und $D_2$ leitend und niederohmig. Ist aber der Augenblickswert des Stromes i größer als I/2, so wird eine der beiden Dioden stromlos und hochohmig.

Zwischen der Eingangsspannung $U_o$ und der an dem Diodenzweig abgegriffenen Ausgangsspannung $U_A$ besteht dann der in Fig. 2 dargestellte Zusammenhang.

Von der Wahl des Vorstromes I hängen der Einsatzpunkt der Entzerrung und auch das Verhältnis zwischen den Anteilen höherer und niedrigerer Ordnung des durch die Schaltung erzeugten Klirrfaktors ab. Um einen gewünschten Klirrfaktor einstellen zu können, wird eine variable Gleichstromquelle für den Vorstrom verwendet.

Der mit der in Fig. 1 dargestellten Schaltung erzeugte Klirrfaktor besitzt nur eine rein reelle Komponente.

Um auch Klirrfaktoren mit imaginären Komponenten erzeugen zu können, ist, wie die Fig. 3 zeigt, in den Diodenzweig zusätzlich ein Blindwiderstand X eingefügt, dessen Betrag für das zu übertragende Frequenzband einen nicht zu vernachlissigenden Wert besitzt. Der Blindwiderstand bewirkt, daß zwischen der Eingangsspannung $U_o$ und der Ausgangsspannung $U_A$ eine Phasenverschiebung $\varphi_A - \varphi_0$ auftritt. Die Phasenverschiebung $\varphi_A - \varphi_0$ hängt in der aus Fig. 4 hervorgehenden Weise von der Eingangsspannung $U_o$ ab. Diese Abhängigkeit kann sowohl durch die Wahl des Diodenvorstromes I als auch durch die Größe des Blindwiderstandes X beeinflußt werden. Das Vorzeichen der imaginären Komponente des von der Schaltung erzeugten Klirrfaktors hängt davon ab, ob als Blindwiderstand eine Kapazität oder eine Induktivität verwendet wird. Die reelle Komponente und die imaginäre Komponente des Klirrfaktors lassen sich weitgehend unabhängig voneinander einstellen, nämlich die reelle Komponente über den Vorstrom I und die imaginäre Komponente über den Blindwiderstand X. Die in beiden Schaltungen parallel zur Diodenstrecke geschaltete Drossel $D_r$ dient dazu, den Gleichstrom gegenüber dem Schaltungseingang bzw. -ausgang abzublocken.

- - - - - - -

- 1 -

ANT Nachrichtentechnik GmbH

Gerberstrasse 33

D-7150 Backnang

K 1 E7/Th/wei
BK 82/2

Patentansprüche

1. Schaltung zur Kompensation von nichtlinearen Signalverzerrungen, dadurch gekennzeichnet, daß das zu entzerrende Eingangssignal ($U_0$) an einen Spannungsteiler (R, $D_1$, $D_2$, X)
gelegt ist, dessen einer Teil mindestens eine Diode ($D_1$,
$D_2$) enthält, und daß durch die Diode ein Gleichstrom (I)
geleitet ist, von dessen Größe es abhängt, ab welchem Augenblickswert des Eingangssignalstromes (i) die Diode
sperrt.

2. Schaltung nach Anspruch 1, dadurch gekennzeichnet, daß der
eine Teil des Spannungsteilers zwei in Reihe geschaltete,
entgegengesetzt gepolte Dioden ($D_1$, $D_2$) enthält und daß
der Vorstrom (I) am Verbindungspunkt zwischen den beiden
Dioden eingespeist wird.

3. Schaltung nach einem der vorhergehenden Ansprüche, <u>dadurch gekennzeichnet</u>, daß in den mit den Dioden ($D_1$, $D_2$) beschalteten Spannungsteilerzweig ein veränderbarer Blindwiderstand (X) eingefügt ist.

0106302

FIG.1

FIG.2

FIG.3

FIG.4